# EUROPEAN PATENT SPECIFICATION

(11) **EP 3 270 702 B1**
(45) Date of publication and mention of the grant of the patent: **24.04.2019**
(21) Application number: 16709757.5
(22) Date of filing: 10.03.2016
(51) Int. Cl.: A23C 9/12, A23C 9/127, A23C 9/142

(54) **METHODS AND APPARATUSES FOR PRODUCING LACTOSE REDUCED MILK**
VERFAHREN UND VORRICHTUNGEN ZUR HERSTELLUNG VON LAKTOSEREDUZIERTER MILCH
PROCÉDÉS ET APPAREILS DE PRODUCTION DE LAIT RÉDUIT EN LACTOSE

(30) Priority: 17.03.2015 SE 1550320
(43) Date of publication of application: 24.01.2018
(73) Proprietor: Tetra Laval Holdings & Finance S.A., 1009 Pully (CH)
(72) Inventor: LAURITZEN, Karsten, DK-8464 Galten (DK)
(74) Representative: Tetra Pak - Patent Attorneys SE
(86) International application number: PCT/EP2016/055121
(87) International publication number: WO 2016/146472

(56) References cited:
- WO-A1-2009/043356
- WO-A1-2010/070204
- WO-A1-2013/137714
- FR-A1- 2 809 595
- US-A1- 2005 181 095
- US-A1- 2005 196 508
- 2 3 ET AL: "GEA Process Engineering Membrane Filtration in the Dairy Industry engineering for a better world GEA Filtration GEA Filtration Global -Yet Local", , 1 January 2012 (2012-01-01), XP055269252, Retrieved from the Internet: URL:http://www.gea.com/global/en/binaries/ Membrane Filtration in the Dairy Industry_tcm11-18227.pdf [retrieved on 2016-04-28]
- Kimberlee Burrington: "Milk Fractionation Techniques Basics of Milk Composition", , 1 January 2013 (2013-01-01), pages 1-8, XP055213017, Retrieved from the Internet: URL:http://www.usdairy.com/~/media/usd/pub lic/technicalreportmilkfractionationtechno logy.pdf.pdf [retrieved on 2015-09-14]

## Description

### Technical Field

Methods and apparatuses related to the field of production of lactose reduced milk are presented. More particularly, the methods and apparatuses are related to a number of filtration steps and filtration devices, respectively, used in order to obtain lactose reduced, even substantially lactose free, milk products.

### Background of the invention

The last decades the number of people suffering from lactose intolerance has steadily increased, and as a direct effect the demand for lactose reduced milk products has increased. This in turn has raised interest from food producers, in particular dairies, to find processing equipment capable of producing milk products containing as little lactose as possible, but still with similar properties as ordinary dairy products, in a cost efficient and reliable way.

It has been found that by using a combination of different filters the lactose content of milk can be reduced to very low levels. One example of such a process is described in WO 2009/043356 by Aria Foods Amba. In this process the lactose content of skim milk can be reduced to as low levels as 0,01% compared to about 4,8% in ordinary skim milk.

The process of WO2009/043356 comprises an ultra filtration step in which a first permeate and a first retentate are formed. The first permeate is then fed to a nano filtration step in which a second permeate and a second retentate are formed. Next the first retentate and the second permeate are mixed and later hydrolyzed.

When using this process above a side effect is that the protein and the calcium content of the resulting product will differ from the input milk, and thus the resulting product will have slightly different properties compared to the input milk. In order to be able to offer a milk with calcium and protein content similar to milk there is a need from food producers for systems and methods capable of producing lactose free milk products with calcium and protein content similar to milk.

### Summary

Accordingly, the methods and apparatuses described herein preferably seeks to mitigate, alleviate or eliminate one or more of the above-identified deficiencies in the art and disadvantages singly or in any combination and solves at least the above mentioned problems.

According to a first aspect it is provided a method for producing a lactose reduced milk product, said method comprising feeding milk through a microfiltration (MF) device to obtain a MF permeate and a MF retentate, feeding said MF permeate through an ultrafiltration (UF) device to obtain an UF permeate and an UF retentate, feeding said UF retentate through a nanofiltration (NF) device to obtain a NF permeate and a NF retentate, combining said NF permeate with said MF retentate into said lactose reduced milk product, and hydrolyzing said lactose reduced milk product to further reduce lactose content of said lactose reduced milk product.

The method may further comprise feeding said UF permeate to said MF device in order to use said UF permeate as a diafiltration media.

The milk when being fed through said MF device, said UF device or said NF device may have a temperature in the range of 5 to 60 degrees C, preferably 5 to 15 degrees C, even more preferably 8 to 12 degrees C.

Mesh sizes of said MF device, said UF device and said NF device may be chosen such that a resulting ratio of protein to calcium is substantially the same as a ratio of protein to Calcium in said milk.

According to a second aspect it is provided a system for producing a lactose reduced milk product, said system comprising a MF device arranged to receive milk and to form a MF permeate and a MF retentate, an UF device arranged to receive said MF permeate and to form an UF permeate and an UF retentate, a NF device arranged to receive an UF permeate and to form a NF permeate and a NF retentate, a flow combining device arranged to combine said NF permeate and said MF retentate into said lactose reduced milk, and a hydrolyzing tank arranged to hydrolyze said lactose reduced milk product to further reduce lactose content of said lactose reduced milk product.

The UF permeate may be fed to said MF device in order to use said UF permeate as a diafiltration media in said MF device.

The milk when being fed through said MF device, said UF device or said NF device may have a temperature in the range of 5 to 60 degrees C, preferably 5 to 15 degrees C, even more preferably 8 to 12 degrees C.

Mesh sizes of said MF device, said UF device and said NF device may be chosen such that a resulting ratio of protein to Calcium is substantially the same as a ratio of protein to calcium in said milk.

The mesh sizes of said MF may be approximately 0,1 µm and/or said UF device may comprise 5 or 10 kD membranes and/or said NF device may comprise 150-300 kD membranes.

According to a third aspect it is provided a lactose reduced milk product produced according to the method according to the first aspect.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig 1 illustrates a flow chart of a system for producing lactose reduced milk according to a prior art solution disclosed in WO2009/043356.
Fig 2 illustrates a flow chart of a system for producing lactose reduced milk, wherein the calcium and protein content of the resulting product is similar to the input milk.

### Detailed description of preferred embodiments

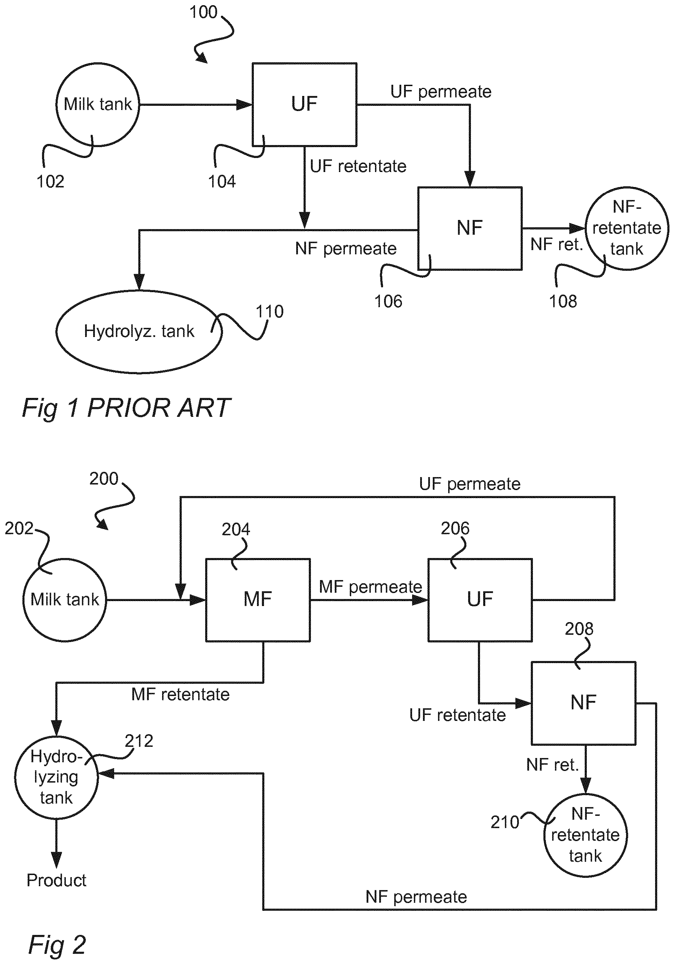

In fig 1, a system 100 for producing lactose reduced milk according to a continuous process disclosed in WO2009/043356, also mentioned above, is illustrated.

Skim milk held in a milk tank 102 is fed to an ultra filtration (UF) device 104 in which an UF permeate and an UF retentate are formed. The UF permeate is fed to a nano filtration (NF) device 106 in which a NF permeate and a NF retentate are formed. The NF retentate is fed and stored in a NF retentate tank 108, while the NF permeate is mixed with the UF retentate, formed in the UF device 104, and fed to a hydrolyzing tank 110.

As mentioned in the background section, a side effect of the process is that the protein content will be increased. This is largely dependent on that proteins are enriched in the UF device 104. More particularly, in the UF device proteins are concentrated, which means that the UF retentate will have a higher protein content than the skim milk and correspondingly that the UF permeate will have a lower protein content.

After having fed the UF permeate to the NF device 106 the NF retentate is formed and fed to the NF retentate tank 108, while the NF permeate formed in the NF device 106 is mixed with UF retentate. When subjecting the UF permeate to nanofiltration, lactose is sorted to the NF retentate which then can be sorted to a separate tank, herein the NF retentate tank. Thus, in summary, by using ultrafiltration proteins, that are molecules larger than the lactose molecules, mineral molecules and water molecules, can be sorted out. Next, the remaining lactose, mineral and water molecules are subjected to a nanofilter such that the lactose molecules, that are larger than mineral and water molecules, can be sorted out. Finally, the proteins and the minerals and water can be combined into a lactose reduced milk product.

An effect of sorting out the proteins at an early stage and then adding them again in a final stage is that few proteins are lost during the process, which has the effect that the ratio protein to calcium will not be the same as in original skim milk. This in turn will affect the product properties such that these are not the same as original skim milk.

In fig 2 an example of a system 200 for producing lactose reduced milk is illustrated. In this particular example, milk from a milk tank 202 is fed to a MF device 204 for forming an MF permeate and an MF retentate. The MF permeate is transferred to an UF device 206 in which an UF permeate and an UF retentate are formed. The UF permeate can be fed back to the MF device and be used as a diafiltration media. By doing so proteins that are not captured in the MF device 204, but captured in the UF device 206 are not fed back to the MF device once again.

The UF retentate is in a next step transferred to a NF device 208 for filtering out lactose. The filtered out lactose comprised in an NF retentate can be transferred to a NF retentate tank 210. The NF permeate, comprising inter alia water and minerals, is fed to a hydrolyzing tank 212. The MF retentate, comprising proteins, is also fed to the hydrolyzing tank 212.

In the hydrolyzing tank 212 the NF permeate and MF retentate combination is hydrolyzed such that any remaining lactose is split into glucose and galactose, which will reduce the level of lactose to a very low level, as low as below 0,05%.

An advantage of having the MF device 204 combined with the UF device 206 is that whey proteins and the dissolved calcium, being smaller than casein, can be filtered out by the MF device 204. The whey proteins will be captured by the UF device 206, but the calcium will not and is then fed back to the MF device 204. The whey proteins will also captured by the NF device 208 together with residuals of calcium and end up in the NF retentate tank 210 together with the lactose. The NF permeate comprising monovalent salts and water will be filtered out by the NF device 208 and fed to the hydrolyzing tank 212 to standardize the protein and lactose level prior to hydrolyzation.

| | Milk | Hydrolyzate | NF retentate |
|---|---|---|---|
| Mass [kg/h] | 10000 | 8960 | 1040 |
| TOP [g/100g] | 3,42 | 3,42 | 3,34 |
| LAC [g/100g] | 4,76 | <0,05 | 25,29 |
| Calcium [mg/100g] | 120 | 118 | 137 |
| Fat [g/100g] | 0,05 | 0,06 | 0,00 |
| TS [g/100g] | 9,01 | 6,64 | 29,44 |

In the table above a test run of the system 200 in fig 2 is disclosed. As can be seen the protein content is the same in the hydrolyzate, i.e. the lactose reduced milk prodcut, and the lactose is below 0.05%. The calcium level is about the same, and so is the fat content.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for producing a lactose reduced milk product, said method comprising
feeding milk through a microfiltration (MF) device (204) to obtain a MF permeate and a MF retentate,
feeding said MF permeate through an ultrafiltration (UF) device (206) to obtain an UF permeate and an UF retentate,
feeding said UF retentate through a nanofiltration (NF) (208) device to obtain a NF permeate and a NF retentate,
combining said NF permeate with said MF retentate into said lactose reduced milk product, and
hydrolyzing said lactose reduced milk product to further reduce lactose content of said lactose reduced milk product.

2. The method according to claim 1, further comprising
feeding said UF permeate to said MF device in order to use said UF permerate as a diafiltration media.

3. The method according to any of the preceding claims, wherein said milk when being fed through said MF device, said UF device or said NF device has a temperature in the range of 5 to 60 degrees C, preferably 5 to 15 degrees C, even more preferably 8 to 12 degrees C.

4. The method according to any of the preceding claims, wherein mesh sizes of said MF device, said UF device and said NF device are chosen such that a resulting ratio of protein to Calcium is substantially the same as a ratio of protein to Calcium in said milk.

5. A system for producing a lactose reduced milk product, said system comprising
a MF device (204) arranged to receive milk and to form a MF permeate and a MF retentate,
an UF device (206) arranged to receive said MF permeate and to form an UF permeate and an UF retentate,
a NF device (208) arranged to receive an UF rententate and to form a NF permeate and a NF retentate,
a flow combining device arranged to combine said NF permeate and said MF retentate into said lactose reduced milk, and
a hydrolyzing tank (212) arranged to hydrolyze said lactose reduced milk product to further reduce lactose content of said lactose reduced milk product.

6. The system according to claim 5, wherein said UF permeate is fed to said MF device in order to use said UF permeate as a diafiltration media in said MF device.

7. The system according to any of the claims 5 to 6, wherein said milk when being fed through said MF device, said UF device or said NF device has a temperature in the range of 5 to 60 degrees C, preferably 5 to 15 degrees C, even more preferably 8 to 12 degrees C.

8. The system according to any of the claims 5 to 7, wherein mesh sizes of said MF device, said UF device and said NF device are chosen such that a resulting ratio of protein to Calcium is substantially the same as a ratio of protein to Calcium in said milk.

9. The system according to any of the claims 5 to 8, wherein said mesh sizes of said MF is approximately 0,1 µm and/or said UF device comprises 5 or 10 kD membranes and/or said NF device comprises 150-300 kD membranes.

## Patentansprüche

1. Verfahren zur Herstellung eines lactosereduzierten Milchprodukts, wobei das Verfahren Folgendes umfasst
Leiten von Milch durch eine Vorrichtung (204) zur Mikrofiltration (MF), um ein MF-Permeat und ein MF-Retentat zu erhalten,
Leiten des MF-Permeats durch eine Vorrichtung (206) zur Ultrafiltration (UF), um ein UF-Permeat und ein UF-Retentat zu erhalten,
Leiten des UF-Retentats durch eine Vorrichtung (208) zur Nanofiltration (NF), um ein NF-Permeat und ein NF-Retentat zu erhalten,
gemeinsames Geben des NF-Permeats und des MF-Retentats in das lactosereduzierte Milchprodukt, und
Hydrolysieren des lactosereduzierten Milchprodukts, um den Lactosegehalt des lactosereduzierten Milchprodukts weiter zu verringern.

2. Verfahren gemäß Anspruch 1, welches weiterhin Folgendes umfasst:
Leiten des UF-Permeats zur MF-Vorrichtung, um das UF-Permeat als Diafiltrationsmedium zu verwenden.

3. Verfahren gemäß einem beliebigen der vorhergehenden Ansprüche, wobei die Milch, wenn sie durch die MF-Vorrichtung, die UF-Vorrichtung oder die NF-Vorrichtung geleitet wird, eine Temperatur im Bereich von 5 bis 60 Grad C, vorzugsweise von 5 bis 15 Grad C, mit noch größerem Vorzug von 8 bis 12 Grad C, hat.

4. Verfahren gemäß einem beliebigen der vorhergehenden Ansprüche, wobei die mesh-Größenwerte der MF-Vorrichtung, der UF-Vorrichtung und der NF-Vorrichtung derart gewählt werden, dass das erhaltene Verhältnis von Protein zu Calcium im Wesentlichen dasselbe wie ein Verhältnis von Protein zu Calcium in der Milch ist.

5. System zur Herstellung eines lactosereduzierten Milchprodukts, wobei das System Folgendes umfasst
eine MF-Vorrichtung (204), die dafür angeordnet ist, Milch aufzunehmen sowie ein MF-Permeat und ein MF-Retentat zu bilden,
eine UF-Vorrichtung (206), die dafür angeordnet ist, das MF-Permeat aufzunehmen sowie ein UF-Permeat und ein UF-Retentat zu bilden,
eine NF-Vorrichtung (208), die dafür angeordnet ist, ein UF-Retentat aufzunehmen sowie ein NF-Permeat und ein NF-Retentat zu bilden,
eine Vorrichtung zum Vereinigen von Strömen, die dafür angeordnet ist, das NF-Permeat und das MF-Retentat gemeinsam in die lactosereduzierte Milch zu geben, und
einen Hydrolysierbehälter (212), der dafür angeordnet ist, das lactosereduzierte Milchprodukt zu hydrolysieren, um den Lactosegehalt des lactosereduzierten Milchprodukts weiter zu verringern.

6. System gemäß Anspruch 5, wobei das UF-Permeat der MF-Vorrichtung zugeleitet wird, um das UF-Permeat als Diafiltrationsmedium in der MF-Vorrichtung zu verwenden.

7. System gemäß einem beliebigen der Ansprüche 5 bis 6, wobei die Milch, wenn sie durch die MF-Vorrichtung, die UF-Vorrichtung oder die NF-Vorrichtung geleitet wird, eine Temperatur im Bereich von 5 bis 60 Grad C, vorzugsweise von 5 bis 15 Grad C, mit noch größerem Vorzug von 8 bis 12 Grad C, hat.

8. System gemäß einem beliebigen der Ansprüche 5 bis 7, wobei die mesh-Größenwerte der MF-Vorrichtung, der UF-Vorrichtung und der NF-Vorrichtung derart gewählt werden, dass das erhaltene Verhältnis von Protein zu Calcium im Wesentlichen dasselbe wie ein Verhältnis von Protein zu Calcium in der Milch ist.

9. System gemäß einem beliebigen der Ansprüche 5 bis 8, wobei die mesh-Größenwerte der MF näherungsweise 0,1 µm betragen und/oder die UF-Vorrichtung 5- oder 10-kD-Membranen umfasst und/oder die NF-Vorrichtung 150- bis 300-kD-Membranen umfasst.

## Revendications

1. Méthode de production d'un produit de lait à teneur réduite en lactose, ladite méthode comprenant
l'alimentation du lait dans un dispositif de microfiltration (MF) (204) afin d'obtenir un perméat de MF et un rétentat de MF,
l'alimentation dudit perméat de MF dans un dispositif d'ultrafiltration (UF) (206) afin d'obtenir un perméat d'UF et un rétentat d'UF,
l'alimentation dudit rétentat d'UF dans un dispositif de nanofiltration (NF) (208) afin d'obtenir un perméat de NF et un rétentat de NF,
la combinaison dudit perméat de NF et dudit rétentat de MF en ledit produit de lait à teneur réduite en lactose, et
l'hydrolyse dudit produit de lait à teneur réduite en lactose afin de réduire davantage la teneur en lactose dudit produit de lait à teneur réduite en lactose.

2. Méthode selon la revendication 1, comprenant en outre
l'alimentation dudit perméat d'UF dans ledit dispositif de MF afin d'utiliser ledit perméat d'UF comme milieu de diafiltration.

3. Méthode selon l'une quelconque des revendications précédentes, dans laquelle ledit lait, lors de son alimentation dans ledit dispositif de MF, ledit dispositif d'UF ou ledit dispositif de NF, possède une température dans la plage allant de 5 à 60°C, préférablement de 5 à 15°C, encore plus préférablement de 8 à 12°C.

4. Méthode selon l'une quelconque des revendications précédentes, dans laquelle les tailles de mesh dudit dispositif de MF, dudit dispositif d'UF et dudit dispositif de NF, sont choisies de telle sorte qu'un rapport résultant des protéines au calcium est sensiblement identique à un rapport des protéines au calcium dans ledit lait.

5. Système de production d'un produit de lait à teneur réduite en lactose, ledit système comprenant
un dispositif de MF (204) conçu afin de recevoir du lait et de former un perméat de MF et un rétentat de MF,
un dispositif d'UF (206) conçu afin de recevoir ledit perméat de MF et de former un perméat d'UF et un rétentat d'UF,
un dispositif de NF (208) conçu afin de recevoir un rétentat d'UF et de former un perméat de NF et un rétentat de NF,
un dispositif de combinaison de courants conçu pour combiner ledit perméat de NF et ledit rétentat de MF en ledit lait à teneur réduite en lactose, et
une cuve d'hydrolyse (212) conçue pour hydrolyser ledit produit de lait à teneur réduite en lactose afin de réduire davantage la teneur en lactose dudit produit de lait à teneur réduite en lactose.

6. Système selon la revendication 5, dans lequel ledit perméat d'UF est alimenté dans ledit dispositif de MF afin d'utiliser ledit perméat d'UF comme milieu de diafiltration dans ledit dispositif de MF.

7. Système selon l'une quelconque des revendications 5 à 6, dans lequel ledit lait, lors de son alimentation dans ledit dispositif de MF, ledit dispositif d'UF ou ledit dispositif de NF, possède une température dans la plage allant de 5 à 60°C, préférablement de 5 à 15°C, encore plus préférablement de 8 à 12°C.

8. Système selon l'une quelconque des revendications 5 à 7, dans lequel les tailles de mesh dudit dispositif de MF, dudit dispositif d'UF et dudit dispositif de NF, sont choisies de telle sorte qu'un rapport résultant des protéines au calcium est sensiblement identique à un rapport des protéines au calcium dans ledit lait.

9. Système selon l'une quelconque des revendications 5 à 8, dans lequel lesdites tailles de mesh de ladite MF sont d'environ 0,1 µm et/ou ledit dispositif d'UF comprend des membranes de 5 ou 10 kDa et/ou ledit dispositif de NF comprend des membranes de 150-300 kDa.
